# EUROPEAN PATENT APPLICATION

(11) **EP 1 777 001 A1**
(43) Date of publication of application: **25.04.2007**
(21) Application number: 05023086.1
(22) Date of filing: 21.10.2005
(51) Int. Cl.: B01J 10/00, C08F 10/00

(54) **Bubble column reactor with level measuring device and method for level measurement therein**

(71) Applicant: Saudi Basic Industries Corporation, Riyadh 11422 (SA); Linde Aktiengesellschaft, 65189 Wiesbaden (DE)
(72) Inventor: Schneider, Richard, 82449 Uffing (DE); Fritz, Peter M., 82008 Unterhaching (DE); Muschelknantz, Sebastian, 81479 München (DE); Bölt, Heinz, 82515 Wolfratshausen (DE); Ali, Talal, 11422 Riyadh (SA); Mosa, Fuad, 11422 Riyadh (SA)
(74) Representative: Winkler, Andreas Fritz Ernst

(57) **Abstract**

The present invention relates to a bubble column reactor comprising a column reactor containing a lower 2-phase section and an upper gaseous phase section, characterized in that the reactor comprises a measurement device for measuring the level of 2-phase section in the column reactor, wherein the measurement device comprises an emitter and a detector for electromagnetic radiation which are positioned outside of the column reactor; and to a method for level measurement in such a reactor.

## Description

The present invention relates to a bubble column reactor comprising a column reactor containing a lower 2-phase section and an upper gaseous phase section, and to a method for level measurement in a bubble column reactor.

Bubble column reactors are widely known in the art. For example, bubble column reactors are utilized in an oligomerization process of ethylene to provide linear alpha-olefins (LAO). Such a bubble column reactor comprises a bottom compartment for introducing gaseous monomer feed, wherein the bottom compartment is separated from the upper reaction compartment by a sparger plate. In the upper reaction compartment, the bubble column reactor contains a lower 2-phase section and an upper gaseous phase section. Conventionally, such a column reactor is operated continuously, as monomer feed, solvent and catalyst are continuously supplied, and also the solvent, linear alpha-olefins, either gaseous or liquid, and catalyst are continuously removed. It is an essential feature of an oligomerization process carried out in a bubble column reactor to carefully control the level of the 2-phase section which should remain substantially constant.

So far, level measurement and control thereof has been carried out by different principles, such as measurement by differential pressure, floating devices, different conductivities of liquid and gaseous phase, and the like.

Especially, in a reactor for preparing linear alpha-olefins the level measurement is extremely difficult due to a high gas content in the 2-phase section, as this zone cannot be considered as totally liquid or gaseous. Further, the densities of the gas phase and the liquid phase may change during the oligomerization process. Finally, as the conventional measurement devices are positioned within the bubble column reactor, also plugging of the measurement devices due to reactive material may occur.

It is an object of the present invention to provide a bubble column reactor and a method for level measurement overcoming the drawbacks of the prior art. Especially, a bubble column reactor and a method shall be provided so that measurement may be carried out independently on the process conditions in that reactor.

This object is achieved in that the reactor comprises a measurement device for measuring the level of the 2-phase section in the column reactor, wherein the measurement device comprises an emitter and a detector for electromagnetic radiation which are positioned outside of the column reactor.

Preferably, the emitter and the detector are located substantially at opposite sides of the column reactor.

In one embodiment, the detector is substantially parallel to the wall of the column reactor substantially along a part of its length or along its entire length.

Further, the emitter may be positioned substantially at the level of the 2-phase section.

Additionally, the detector may be in communication with a control unit.

Even preferred, the control unit is in communication with a valve positioned in a liquid outlet line of the column reactor.

The emitter may emit cobalt γ - radiation.

The object is also achieved by a method for level measurement in a bubble column reactor containing a lower 2-phase section and an upper gaseous phase section, wherein the level of the 2-phase section is measured by a measuring device comprising an emitter and a detector for electromagnetic radiation which are positioned outside of the column reactor.

Preferably, signals detected from the detector are transferred to a control unit.

Finally, it is preferred that the control unit controls a valve positioned in a liquid outlet line of the column detector dependent on the signals transferred by the detector.

Surprisingly, the problems of the prior art may be overcome by a bubble column reactor utilizing a measurement device which is not in direct contact with the gaseous or liquid phase within the reactor. Rather, according to the present invention, the measurement device comprising an emitter and a detector is positioned outside of the column reactor, preferably located at opposite sides thereof. The emitter emits electromagnetic radiation through the bubble column reactor, i.e. through the 2-phase section and the gaseous phase section, the emitted radiation is then detected by a detector, and differences due to the different phases may be recognized. Preferably, a respective signal detected may be then transferred to a control unit which may be also in communication with a valve positioned in a liquid outlet line of the bubble column reactor to adjust the level of the 2-phase section as required.

Thus, a contact-free level measurement method is applied, wherein the result of the level measurement is also independent from density changes. Additionally, plugging of the measurement devices can be prevented, as the devices are positioned outside of the reactor.

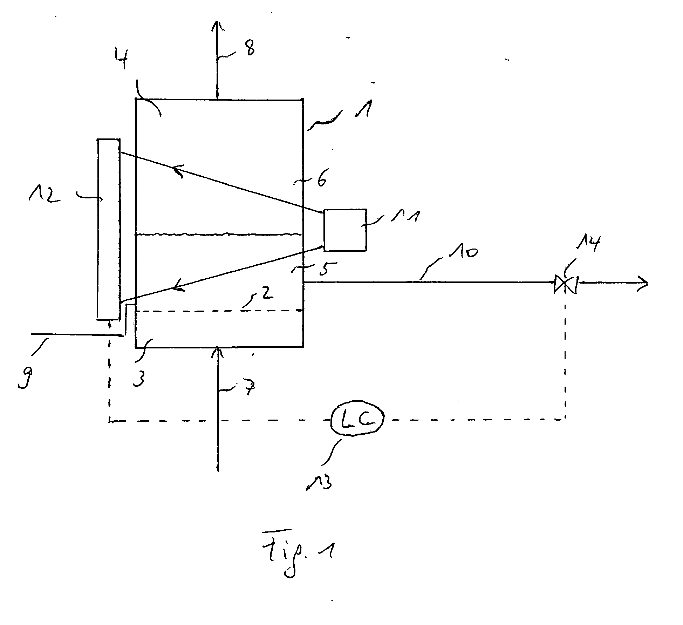

Additional advantages and features of the present invention are further illustrated with reference to the accompanying drawing, wherein figure 1 illustrates a schematic diagram of an inventive bubble column reactor.

Figure 1 illustrates a bubble column reactor 1 having a sparger plate 2 dividing the bubble column reactor 1 into a bottom compartment 3 and an upper reaction compartment 4. Within the upper reaction compartment 4 a lower 2-phase section 5 and an upper gaseous phase section 6 are provided. Additionally, a feed line 7 for introducing gaseous monomer feed into the bottom compartment 3, an outlet line 8 for removing gaseous components, a feed line 9 for introducing solvent and catalyst, and an outlet line 10 for removing liquid products are provided. At the side wall of the bubble column reactor 1 an emitter 11 is provided, preferably substantially at the level of the 2-phase section 5. On the opposite side of the reactor wall, a detector 12 is provided which, preferably, is substantially parallel to the wall of the reactor substantially along a part of its length or along its entire length. The detector is in communication with a control unit 13 which is also in communication with a valve 14 positioned in the outlet line 10.

In operation of the bubble column reactor 1, the level of the 2-phase section 5 may change due to several reasons. For measuring and controlling the level of the 2-phase section, the emitter 11 emits electromagnetic radiation through the bubble column reactor 1, i.e. through the 2-phase section, the gaseous section and intermediate phase thereinbetween. The emitted electromagnetic radiation is detected by the detector 12 and may be transferred to the control unit 13 which may open or close the valve 14 as desired in order to adjust the level of the 2-phase section 5 to the desired level.

The features disclosed in the foregoing description, in the claims and in the drawings may, both separately and in any combination thereof, be material for realizing the invention in diverse forms thereof.

## Claims

1. Bubble column reactor comprising a column reactor (1) containing a lower 2-phase section (5) and an upper gaseous phase section (6), **characterized in that** the reactor (1) comprises a measurement device for measuring the level of the 2-phase section (5) in the column reactor (1), wherein the measurement device comprises an emitter (11) and a detector (12) for electromagnetic radiation which are positioned outside of the column reactor (1).

2. Bubble column reactor according to claim 1, wherein the emitter (11) and the detector (12) are located substantially at opposite sides of the column reactor (1).

3. Bubble column reactor according to claim 1 or 2, wherein the detector (12) is substantially parallel to the wall of the column reactor (1) substantially along a part of its length or along its entire length.

4. Bubble column reactor according to any of the preceding claims, wherein the emitter (11) is positioned substantially at the level of the 2-phase section (5).

5. Bubble column reactor according to any of the preceding claims, wherein the detector (12) is in communication with a control unit (13).

6. Bubble column reactor according to claim 5, wherein the control unit (13) is in communication with a valve (14) positioned in a liquid outlet line (10) of the column reactor (1).

7. Bubble column reactor according to any of the preceding claims, wherein the emitter emits cobalt γ-radiation.

8. Method for level measurement in a bubble column reactor containing a lower 2-phase section (5) and an upper gaseous phase section (6), **characterized in that** the level of the 2-phase section (5) is measured by a measuring device comprising an emitter (11) and a detector (12) for electromagnetic radiation which are positioned outside of the column reactor (1).

9. Method according to claim 8, wherein signals detected from the detector (12) are transferred to a control unit (13).

10. Method according to claim 9, wherein the control unit (13) controls a valve (14) positioned in a liquid outlet line (10) of the column detector (1) dependent on the signals transferred by the detector (12).
